Europäisches Patentamt

European Patent Office

Office européen des brevets

(11) Veröffentlichungsnummer: **0 478 883 A2**

## EUROPÄISCHE PATENTANMELDUNG

(21) Anmeldenummer: **91105824.6**

(22) Anmeldetag: **12.04.91**

(51) Int. Cl.5: **B60K 28/16**, B60K 31/02

(30) Priorität: **01.10.90 DE 4031003**

(43) Veröffentlichungstag der Anmeldung:
**08.04.92 Patentblatt 92/15**

(84) Benannte Vertragsstaaten:
**DE ES FR GB IT SE**

(71) Anmelder: **VDO Adolf Schindling AG**
**Gräfstrasse 103**
**W-6000 Frankfurt/Main 90(DE)**

(72) Erfinder: **Mausner, Eberhard**
**In den Weingärten 25**
**W-6237 Liederbach(DE)**
Erfinder: **Pfalzgraf, Manfred**
**Luisenstrasse 24**
**W-6000 Frankfurt/Main(DE)**

(74) Vertreter: **Klein, Thomas, Dipl.-Ing. (FH)**
**Sodener Strasse 9 Postfach 6140**
**W-6231 Schwalbach a. Ts.(DE)**

(54) **Lastverstelleinrichtung.**

㊼ Die Erfindung schlägt eine Lastverstelleinrichtung vor, mit einem auf ein die Leistung einer Brennkraftmaschine bestimmenden Stellglied (10) einwirkbaren Steuerelement (9), das mit einem über ein Fahrpedal (1) betätigbaren Mitnehmer (3) federgekoppelt und zusätzlich mittels eines elektrischen Stellantriebes (11) bewegbar ist. Dem Mitnehmer ist ein Sollwerterfassungselement (6) zugeordnet und es wirkt mit diesem ein dem Steuerelement zugeordnetes und auf den elektrischen Stellantrieb einwirkendes Istwerterfassungselement (19) zusammen, wobei der elektrische Stellantrieb in Abhängigkeit vor den erfaßten Werten von einer elektronischen Regeleinrichtung (7) ansteuerbar ist. Das Steuerelement weist ein erstes, dem Stellglied zugeordnetes Steuerelementteil (9a) und ein zweites, dem Stellantrieb zugeordnetes Steuerelementteil (9b) auf, ferner ist ein Leerwegkoppelelement (17) vorgesehen, das eine relative, zumindest in einer Regelrichtung anschlagbegrenzte Beweglichkeit der Steuerelementteile zueinander, zumindest über einen Teilverstellbereich des Steuerelementes ermöglicht.

Die Ausgestaltung der Lastverstelleinrichtung gestattet eine fahrpedalseitige Ansteuerung des Stellgliedes, unabhängig von der Stellantriebsseite bei nicht aktiviertem Stellantrieb, ferner kann bei aktiviertem Stellantrieb zumindest in einer Regelrichtung ein Regelvorgang bewerkstelligt werden.

FIG.1

Die Erfindung betrifft eine Lastverstelleinrichtung mit einem auf ein die Leistung einer Brennkraftmaschine bestimmenden Stellglied einwirkbaren Steuerelement, das mit einem über ein Fahrpedal betätigbaren Mitnehmer federgekoppelt und zusätzlich mittels eines elektrischen Stellantriebes bewegbar ist, mit einem dem Mitnehmer zugeordneten Sollwerterfassungselement, einem mit diesem zusammenwirkenden, dem Steuerelement zugeordneten und auf den elektrischen Stellantrieb einwirkenden Istwerterfassungselement, wobei der elektrische Stellantrieb in Abhängigkeit von den erfaßten Werten von einer elektronischen Regeleinrichtung ansteuerbar ist.

Eine derartige Lastverstelleinrichtung ist aus der DE 38 15 734 Al bekannt. Bei dieser ermöglicht der elektrische Stellantrieb eine mitnehmerunabhängige Regelung des Stellgliedes, so zum Beispiel zum Zwecke der Leerlaufregelung, der Geschwindigkeitsregelung oder der Antischlupfregelung. Hierzu ist entweder der elektrische Stellantrieb dauernd mit dem Steuerelement verbunden und muß demzufolge - auch wenn ausschließlich die Regelung über den fahrpedalseitigen Mitnehmer erfolgt und der Stellantrieb deaktiviert ist - mitbewegt werden, oder andererseits ist er mittels einer Kupplung vom Stellglied trennbar.

Es ist Aufgabe der vorliegenden Erfindung, eine Lastverstelleinrichtung der genannten Art so weiter zu bilden, daß mit dieser grundsätzlich ohne Kupplung, bei baulich einfacher Ausbildung, eine fahrpedalseitige Ansteuerung des Stellgliedes unabhängig von der Stellantriebsseite bei nicht aktiviertem Stellantrieb erfolgen können, sowie bei aktiviertem Stellantrieb zumindest in einer Regelrichtung ein Regelvorgang bewerkstelligt werden kann.

Gelöst wird die Aufgabe bei einer Lastverstelleinrichtung der genannten Art dadurch, daß das Steuerelement ein erstes, dem Stellglied zugeordnetes Steuerelementteil und ein zweites, dem Stellantrieb zugeordnetes Steuerelementteil aufweist, sowie ein Leerwegkoppelelement vorgesehen ist, das eine relative, zumindest in einer Regelrichtung anschlagbegrenzte Beweglichkeit der Steuerelementteile zueinander zumindest über einen Teilverstellbereich des Steuerelementes ermöglicht. Durch die erfindungsgemäße Lösung ist damit eine Entkopplung des dem Stellglied, das vorzugsweise als Drosselklappe ausgebildet ist, zugeordneten Steuerelementteiles vom Stellantrieb gegeben, und dies insbesondere zumindest über einen Teilverstellbereich des Steuerelementes, so daß eine Nachführung des dem Stellantrieb zugeordneten Steuerelementteiles allenfalls dann erforderlich ist, wenn das dem Stellglied zugeordnete Steuerelementteil eine Position außerhalb des vorgegebenen Teilverstellbereiches einnehmen soll. Aufgrund der Gestaltung der Lastverstelleinrichtung kommt diese damit zur Regelung des Stellgliedes mit einem Stellantrieb und einem diesem zugeordneten Steuerelementteil aus. Die Trennung von Stellantriebsseite und Stellglied durch die beiden Steuerelementteile und das Leerwegkoppelelement gestattet es, die Stellantriebsseite der Lastverstelleinrichtung als separates Bauteil auszubilden, womit bestehende, auf die fahrpedalseitige Ansteuerung der Lastverstelleinrichtung ausgerichtete Einheiten unkompliziert nachgerüstet werden können.

Gemäß einer besonderen Ausführungsform der Erfindung ist vorgesehen, daß die relative Beweglichkeit der Steuerelementteile in Aufregel- und in Abregelrichtung des Stellgliedes begrenzt ist. Die Begrenzung der relativen Beweglichkeit sollte dabei eine relative Verstellung der Steuerelementteile zueinander in einem Verstellbereich von Leerlauf bis Vollast ermöglichen. Eine solche Gestaltung ist dann von Vorteil, wenn sich die stellantriebseitige Regelung des Stellgliedes auf eine Geschwindigkeitsregelung und einer Antischlupfregelung beschränkt. Durch die relative Verstellung der Steuerelementteile im Verstellbereich von Leerlauf bis Vollast kann bei nicht aktiviertem Stellantrieb das stellgliedseitige Steuerelementteil bei Ansteuerung über das Fahrpedal frei zum stellantriebseitigen Steuerelementteil bewegt werden; erst für den Fall der Geschwindigkeits- bzw. Antischlupfregelung wird der Stellantrieb aktiviert und es wirkt das Leerwegkoppelelement durch die von diesem ausgeübte Begrenzung der relativen Beweglichkeit der beiden Steuerelementteile in Aufregel- und Abregelrichtung im Sinne der gewünschten Regelung. Vorteilhaft bildet das Leerwegkoppelelement Bestandteil eines Steuerelementteiles, insbesondere des stellantriebsseitigen Steuerelementteiles und weist im Bewegungsweg des anderen Steuerelementteiles zwei Anschläge auf, ferner sollte eine das stellantriebseitige Steuerelementteil in Leerlaufrichtung vorspannende Feder, insbesondere eine am stellantriebseitigen Steuerelement angreifende Zugfeder, vorgesehen sein. Das Leerwegkoppelelement führt damit die beiden Steuerelementteile mit Spiel und koppelt diese formschlüssig. Zusätzlich kann zum Leerwegkoppelelement zwischen diesem und dem elektrischen Stellantrieb eine Kupplung vorgesehen sein. Um die jeweilige Stellung des stellantriebseitigen Steuerelementteiles darstellen zu können, was für die stellantriebseitige Steuerung des Stellgliedes über die Regelelektronik von Bedeutung ist, sollte dem stellantriebseitigen Steuerelementteil das Istwerterfassungselement zugeordnet sein. Daneben ist es vorteilhaft, wenn auch die Stellung des stellgliedseitigen Steuerelementteiles durch ein weiteres Istwerterfassungselement darstellbar ist und an die elektronische Regeleinrichtung weitergegeben wird. Es ist aber auch möglich, auf dieses Istwerterfassungselement zu verzichten und statt dessen im Wege einer elektronischen Auswertung die Stellung des Stellgliedes aus der aktuellen Position des Mitnehmers, erfaßt durch das Sollwerterfassungselement und der aktuellen Position des stellgliedseitigen Steuerelementteiles, erfaßt durch das diesem zugeordnete Istwerterfassungselement, zu errechnen.

Gemäß einer weiteren bevorzugten Ausführungsform der Erfindung ist vorgesehen, daß die relative Beweglichkeit der Steuerelementteile nur in Aufregelrichtung des Stellglieds begrenzt ist. Die Begrenzung ermöglicht es, über den elektrischen Stellantrieb im Sinne der Antischlupfregelung auf das stellgliedseitige Steuerelementteil und damit das Stellglied im Sinne einer Leistungsverminderung einzuwirken. Hierzu kann beispielsweise das Leerwegkoppelelement als Kupplung mit einem Mitnehmer ausgebildet sein, wobei eine Kupplungshälfte mit dem einen Steuerelementteil und die andere Kupplungshälfte mit dem anderen Steuerelementteil verbunden ist, sowie die Relativbewegung der Steuerelementteile in Aufregelrichtung des Stellgliedes durch formschlüssigen Eingriff des mit einer Kupplungshälfte verbundenen Mitnehmers in der anderen Kupplungshälfte begrenzt ist. Während die Antischlupfregelung durch den formschlüssigen Eingriff der beiden Kupplungshälften des Leerwegkoppelelementes erfolgt, ist eine Geschwindigkeitsregelung durch Aktivierung der Kupplung und damit das Verbinden der beiden Kupplungshälften möglich. Bevorzugt erfolgt die Kraftübertragung bei geschlossener Kupplung zwischen den beiden Steuerelementteilen durch Reibschluß. Damit die dem Stellantrieb zugeordnete Kupplungshälfte bei geöffneter Kupplung und nicht aktiviertem Stellantrieb eine definierte Position einnimmt, ist eine Feder vorgesehen, die diese Kupplungshälfte und damit das stellantriebseitige Steuerelementteil in Vollastrichtung vorspannt. Die Vorspannung in dieser Richtung ermöglicht aus allen Betriebspositionen heraus nicht nur eine Geschwindigkeits- bzw. Antischlupfregelung, sondern auch eine Leerlaufregelung über den elektrischen Stellantrieb, wobei in diesem Fall eine Notlauffeder vorgesehen sein sollte, die bei einem Ausfall der elektronischen Regeleinrichtung, des elektrischen Stellantriebes oder anderer Regelbauteile das Stellglied in die maximale Leerlaufposition überführt. Schließlich sollte dem stellantriebseitigen Steuerelementteil wiederum das Istwerterfassungselement zugeordnet sein und es kann die Position des stellgliedseitigen Steuerelementteiles durch ein weiteres Istwerterfassungselement erfaßt werden.

Weitere Merkmale der Erfindung sind in der Beschreibung der Figuren dargestellt, wobei bemerkt wird, daß alle Einzelmerkmale und alle Kombinationen von Einzelmerkmalen erfindungswesentlich sind.

Die Erfindung läßt zahlreiche Ausführungsformen zu. Es zeigt:

Figur 1 ein erstes Grundprinzip der vorliegenden Erfindung, gezeigt anhand eines Blockschaltbildes in Lineardarstellung,

Figur 2 die Lineardarstellung gemäß dem Blockschaltbild nach Figur 1 umgesetzt in eine vereinfacht dargestellte konstruktive Gestaltung,

Figur 3 die Erfindung nach einem zweiten Grundprinzip, gezeigt anhand eines Blockschaltbildes in linearer Darstellung und

Figur 4 eine Schaltung zur Ermittlung der Stellung des Stellgliedes auf Basis der Position des Mitnehmers und der Position des stellantriebseitigen Steuerelementes.

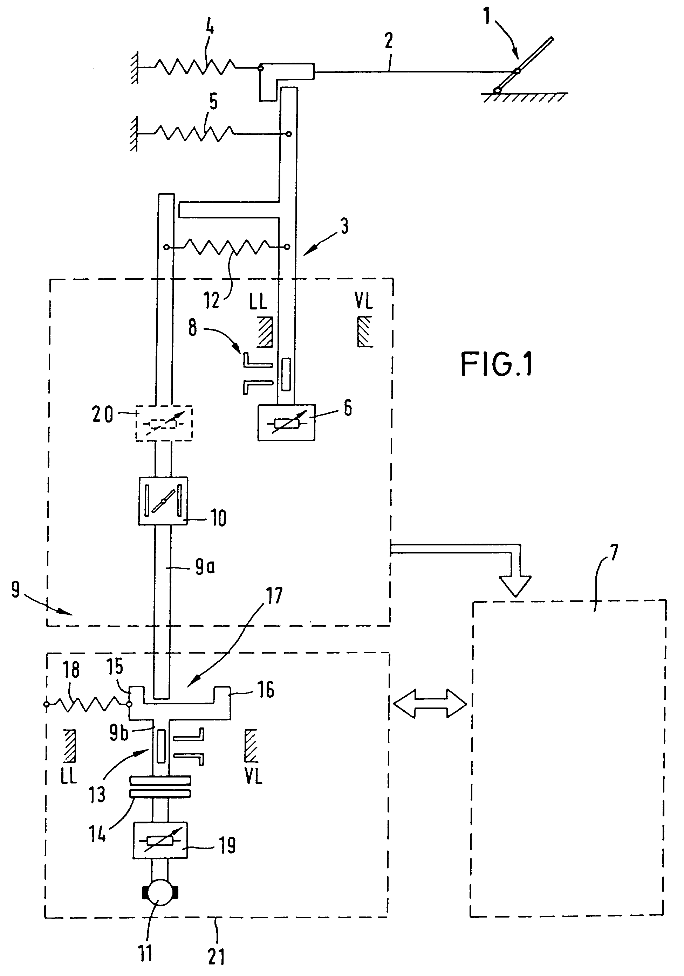

In der Figur 1 ist ein Fahrpedal 1 gezeigt, mit dem über ein Gestänge 2 ein einteiliger Mitnehmer 3 zwischen einem Leerlaufanschlag LL und einem Vollastanschlag VL verschiebbar ist. Der Mitnehmer 3 und das Fahrpedal 1 sind mittels an diesen angreifender Rückzugfedern 4 und 5 in Leerlaufrichtung vorgespannt. Der Mitnehmer 3 ist mit einem Sollwerterfassungselement 6 in Art eines Schleifers eines Potentiometers verbunden, das mit einer elektronischen Regeleinrichtung 7 zusammenwirkt. Die Leerlaufstellung des Mitnehmers 3 wird mittels eines Sicherheitskontaktes 8 erfaßt, der gleichfalls mit der elektronischen Regeleinrichtung 7 zusammenwirkt.

Die Lastverstelleinrichtung weist ferner ein Steuerelementteil 9 auf, das mit einem als Drosselklappe ausgebildeten Stellglied 10 zusammenwirkt. Angesteuert wird das Steuerelement 9 und damit die Drosselklappe 10 über den Mitnehmer 3 und/oder einen elektrischen Stellantrieb 11.

Das Steuerelement 9 besteht aus einem stellgliedseitigen Steuerelementteil 9a und einem stellantriebseitigen Steuerelementteil 9b. Die Verbindung zwischen dem Mitnehmer 3 und dem stellgliedseitigen Steuerelementteil 9a erfolgt durch eine Koppelfeder 12, die die beiden Teile gegeneinander zieht. Die Leerlaufposition des stellantriebseitigen Steuerelementteiles 9b überwacht ein weiterer Sicherheitskontakt 13, der gleichfalls mit der elektronischen Regeleinrichtung 7 zusammenwirkt.

Über den elektrischen Stellantrieb 11 und einem diese nachgeschaltete Kupplung 14 erfolgt die Ansteuerung des stellantriebseitigen Steuerelementteiles 9b. Dieses weist im Bereich seines dem stellgliedseitigen Steuerelementteil 9a zugewandten Endes zwei Anschläge 15 und 16 auf, zwischen denen das freie Ende des stellgliedseitigen Steuerelementteiles 9a geführt ist. Der lichte Abstand der beiden Anschläge 15 und 16 entspricht dabei dem Stellweg des stellgliedseitigen Steuerelementteiles 9a zwischen LL bis VL zuzüglich der Abmessung dieses Steuerelementteiles in Stellrichtung, so daß es über das Pedal 1 von LL bis VL bewegt werden kann, ohne das stellantriebseitige Steuerelementteil 9b mitzunehmen. Der die Anschläge 15 und 16 umfassende Bereich des stellantriebseitigen Steuerelementteiles 9b bildet ein Leerwegkoppelelement 17. Eine Rückzugfeder 18 spannt das stellantriebseitige Steuerelementteil 9b in Leerlaufrichtung vor, der Verstellweg dieses Steuerelementteiles ist durch Anschläge LL und VL begrenzt, die jeweilige Position dieses Steuerelementteiles 9b wird durch ein Istwerterfassungselement 19 erfaßt. Zur Erfassung der Position des stellgliedseitigen Steuerelementteiles 9a kann ein weiteres Istwerterfassungselement 20 vorgesehen sein.

Im Normalbetrieb ist die Kupplung 14 geschlossen. Wegen des Abstandes der beiden Anschläge 15 und 16 des Leerwegkoppelelementes 17 kann die Lastverstelleinrichtung über den gesamten Betriebsbereich LL bis VL über das Fahrpedal 1 angesteuert werden, ohne daß hierdurch das stellantriebseitige Steuerelementteil 9b beeinflußt wird. Soll eine Geschwindigkeitsregelung erfolgen, wird der elektrische Stellantrieb aktiviert, womit das stellantriebseitige Steuerelementteil 9b in Richtung VL bewegt wird, sich der Anschlag 15 an das stellgliedseitige Steuerelementteil 9 anlegt und dieses entsprechend der Regelvorgabe mehr oder weniger in Richtung VL mitnimmt. Für die Antischlupfregelung muß das stellantriebseitige Steuerelementteil 9b über den Leerweg des Leerwegkoppelelementes 17 in Richtung LL verfahren werden, bis der Anschlag 16 in Anlage mit dem stellantriebseitigen Steuerelementteil 9b gelangt und eine Abregelung des Stellgliedes 10 möglich ist. Die Figur 1 zeigt den Mitnehmer 3 in der Ausgangsstellung LL sowie das stellantriebseitige Steuerelementteil 9b in dessen Ausgangsstellung, wobei die Teile die Sicherheitskontakte 8 bzw. 13 kontaktieren.

Die das stellantriebseitige Steuerelementteil 9b umschließende gestrichelte Linie soll zum Ausdruck bringen, daß dieses Teil und die unmittelbar mit ihm zusammenwirkenden Teile, insbesondere der elektrische Stellantrieb 11 und das Istwerterfassungselement 19 eine Baueinheit 21 bilden.

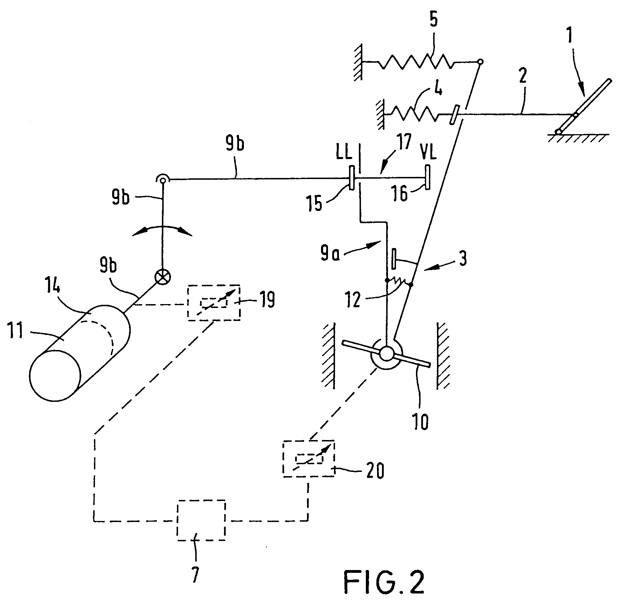

Figur 2 zeigt die Umsetzung der aus Figur 1 ersichtlichen Linearbewegung der Bauteile in die in der Praxis primär Anwendung findende Schwenkbewegung der relevanten Bauteile. Mit Teilen nach der Figur 1 übereinstimmende Teile sind mit gleichen Bezugsziffern bezeichnet.

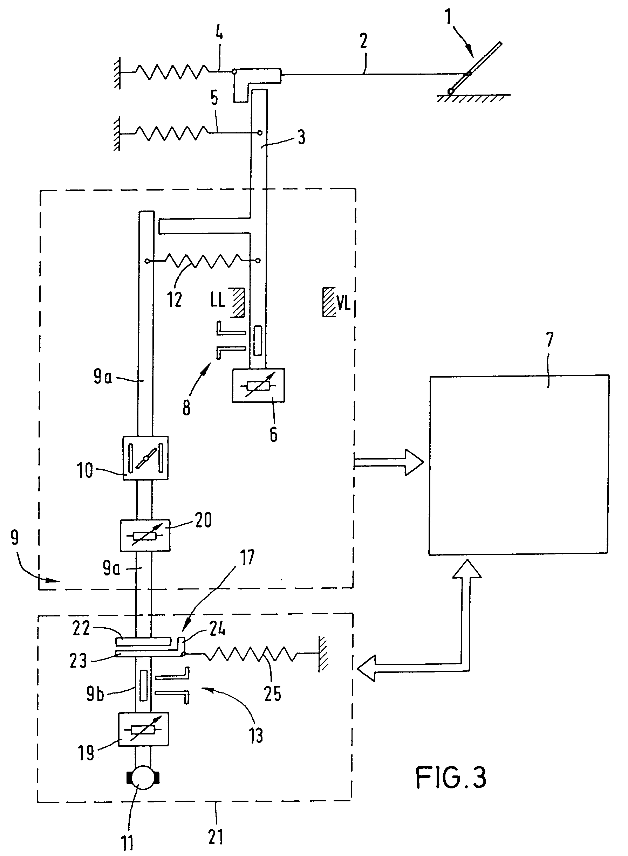

Auch bei der in Figur 3 gezeigten, gegenüber der Darstellung der Figur 1 nur im Bereich des Leerwegkoppelelementes 17 abgewandelten Variante sind mit den in dieser Zeichnung gezeigten Teile in übereinstimmende Bauteile der Einfachheit halber mit gleichen Bezugsziffern bezeichnet. Bei der Ausführung nach der Figur 3 entfällt die Kupplung 14, die dort in aller Regel aus zwei üblichen, miteinander verbindbaren Kupplungshälften besteht und es weist statt dessen das Leerwegkoppelement 17 zwei Kupplungshälften 22 und 23 auf, wobei die Kupplungshälfte 22 mit dem stellgliedseitigen Steuerelementteil 9a und die Kupplungshälfte 23 mit dem stellantriebseitigen Steuerelementteil 9b verbunden ist, sowie die Relativbewegung der Steuerelementteile 9a und 9b in Aufregelrichtung des Stellglieds 10, somit in Vollastrichtung des Steuerelementteiles 9a, durch formschlüssigen Eingriff eines mit der Kupplungshälfte 23 verbundenen Mitnehmers 24 in der anderen Kupplungshälfte 22 begrenzt ist. Die Begrenzung kann beispielsweise dadurch erfolgen, daß der Mitnehmer 27 ein nicht gezeigtes Langloch der Kupplungshälfte 22 durchsetzt und die Länge des Langloches dabei so gewählt ist, daß, auf den Stellweg des Mitnehmers bezogen, diese nur in der genannten Aufregelrichtung, somit durch ein Ende des Langloches begrenzt ist. Die prinzipielle Ausgestaltung der Lastverstelleinrichtung nach der Figur 3 geht davon aus, daß die Kupplungshälften 22 und 23 im Regelfall zueinander geöffnet sind, so daß aufgrund der freien Beweglichkeit des Mitnehmers relativ zur Kupplungshälfte 22 das stellgliedseitige Steuerelementteil 9a frei über das Fahrpedal 1 bewegt werden kann. Bei der Antischlupfregelung verbleiben die Kupplungshälften 22 und 23 zueinander in der geöffneten Stellung und es erfolgt eine Abregelung des Stellgliedes 10 über den elektrischen Stellantrieb 11, der den Mitnehmer 24 in Leerlaufrichtung gegen den Anschlag der Kupplungshälfte 22 bewegt. Für eine Geschwindigkeitsregelung werden die beiden Kupplungshälften 22 und 23, wie bei der Kupplung 14 nach der Ausführungsform gemäß Figur 1, geschlossen, so daß sich eine starre Verbindung zwischen den beiden Steuerelementteilen 9a und 9b ergibt und das Stellglied 10 gemäß der Vorgabe der elektronischen Regeleinrichtung 7 mittels des elektrischen Stellantriebes 11 bewegt wird. Entsprechend der Regelung des Stellgliedes 10 bei der Antischlupfregelung gestattet die Lastverstelleinrichtung auch eine Leerlaufregelung bei aktiviertem elektrischen Stellantrieb und voneinander gelösten Kupplungshälften 22 und 23.

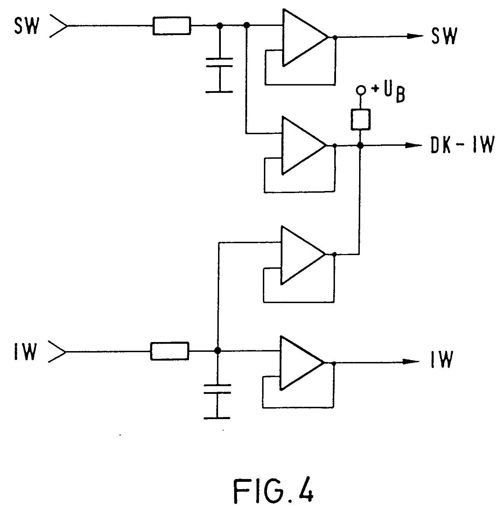

Figur 4 zeigt Grundzüge einer elektronischen Schaltung, die es ermöglicht, die Position des stellgliedseitigen Steuerelementteiles 9a aufgrund der Position von Mitnehmer 3 und stellantriebseitigem Steuerelementteil 9b darzustellen, das heißt auf ein dem stellgliedseitigen Steuerelementteil 9a zugeordnetes Istwerterfassungselement 20 zu verzichten. Die Schaltung weist als Eingabegröße den vom Sollwerterfassungselement 6 dargestellten Sollwert SW und dem vom Istwerterfassungselement 19 dargestellten Istwert IW auf, die gleichzeitig auch Ausgabegrößen darstellen, wobei die eingegebenen Werte SW und IW jeweils auf den geringeren Wert überprüft werden, der dann als Istwert der Drosselklappe DK-IW anzusehen ist.

**Bezugszeichenliste**

| | |
|---|---|
| 1 | Fahrpedal |
| 2 | Gestänge |
| 3 | Mitnehmer |
| 4 | Rückzugfeder |
| 5 | Rückzugfeder |
| 6 | Sollwerterfassungselement |
| 7 | elektronische Regeleinrichtung |
| 8 | Sicherheitskontakt |
| 9 | Steuerelement |
| 9a | stellgliedseitiges Steuerelementteil |
| 9b | stellantriebseitiges Steuerelementteil |
| 10 | Stellglied |
| 11 | elektrischer Stellantrieb |
| 12 | Koppelfeder |
| 13 | Sicherheitskontakt |
| 14 | Kupplung |
| 15 | Anschlag |
| 16 | Anschlag |
| 17 | Leerwegkoppelelement |
| 18 | Rückzugfeder |
| 19 | Istwerterfassungselement |
| 20 | Istwerterfassungselement |
| 21 | Baueinheit |
| 22 | Kupplungshälfte |
| 23 | Kupplungshälfte |
| 24 | Mitnehmer |
| 25 | Rückzugfeder |

**Patentansprüche**

1. Lastverstelleinrichtung mit einem auf ein die Leistung einer Brennkraftmaschine bestimmenden Stellglied einwirkbaren Steuerelement, das mit einem über ein Fahrpedal betätigbaren Mitnehmer federgekoppelt und zusätzlich mittels eines elektrischen Stellantriebes bewegbar ist, mit einem dem Mitnehmer zugeordneten Sollwerterfassungselement, einem mit diesem zusammenwirkenden, dem Steuerelement zugeordneten und auf den elektrischen Stellantrieb einwirkenden Istwerterfassungselement, wobei der elektrische Stellantrieb in Abhängigkeit von den erfaßten Werten von einer elektronischen Regeleinrichtung ansteuerbar ist, **dadurch gekennzeichnet**, daß das Steuerelement (9) ein erstes, dem Stellglied (10) zugeordnetes Steuerelementteil (9a) und ein zweites, dem Stellantrieb (11) zugeordnetes Steuerelementteil (9b) aufweist, sowie ein Leerwegkoppelelement (17) vorgesehen ist, das eine relative zumindest in einer Regelrichtung anschlagbegrenzte Beweglichkeit der Steuerelementteile (9a, 9b) zueinander, zumindest über einen Teilverstellbereich des Steuerelementes (9) ermöglicht.

2. Lastverstelleinrichtung nach Anspruch 1, **dadurch gekennzeichnet**, daß die relative Beweglichkeit der Steuerelementteile (9a, 9b) in Aufregel- und in Abregelrichtung des Stellgliedes (10) begrenzt ist.

3. Lastverstelleinrichtung nach Anspruch 2, **dadurch gekennzeichnet**, daß die Begrenzung der relativen Beweglichkeit eine relative Verstellung der Steuerelementteile (9a, 9b) zueinander in einem Verstellbereich von Leerlauf bis Vollast ermöglicht.

4. Lastverstelleinrichtung nach Anspruch 2 oder 3, **dadurch gekennzeichnet**, daß das Leerwegkoppelelement (17) mit einem Steuerelementteil (9b), insbesondere dem stellantriebseitigen Steuerelementteil (9b) verbunden ist und im Bewegungsweg des anderen Steuerelementteiles (9a) zwei Anschläge (15, 16) aufweist, sowie eine das stellantriebseitige Steuerelementteil (9b) in Leerlaufrichtung vorspannende Feder, insbesondere einer am stellantriebseitigen Steuerelement (9b) angreifende Zugfeder (18), vorgesehen ist.

5. Lastverstelleinrichtung nach einem der Ansprüche 2 bis 4, **dadurch gekennzeichnet**, daß das stellantriebseitige Steuerelementteil (9b) zwischen dem Stellantrieb (11) und dem Leerwegkoppelelement (17) eine Kupplung (14) aufweist.

6. Lastverstelleinrichtung nach Anspruch 1, **dadurch gekennzeichnet**, daß die relative Beweglichkeit der Steuerelementteile (9a, 9b) nur in Aufregelrichtung des Stellgliedes (10) begrenzt ist.

7. Lastverstelleinrichtung nach Anspruch 6, **dadurch gekennzeichnet**, daß das Leerwegkoppelelement (17) als Kupplung (22, 23) mit einem Mitnehmer (24) ausgebildet ist, wobei eine Kupplungshälfte (22) mit dem einen Steuerelementteil (9a) und die andere Kupplungshälfte (23) mit dem anderen Steuerelementteil (9b) verbunden ist, sowie die Relativbewegung der Steuerelementteile (9a, 9b) in Aufregelrichtung des Stellglieds (10) durch formschlüssigen Eingriff des mit einer Kupplungshälfte (23) verbundenen Mitnehmers (24) in der anderen Kupplungshälfte (22) begrenzt ist.

8. Lastverstelleinrichtung nach Anspruch 7, **dadurch gekennzeichnet**, daß der Mitnehmer (24) mit der stellantriebsseitigen Kupplungshälfte (23) verbunden ist und ein Langloch in der stellgliedseitigen Kupplungshälfte (22) durchsetzt.

9. Lastverstelleinrichtung nach Anspruch 7 oder 8, **dadurch gekennzeichnet**, daß eine Feder (25) die stellantriebseitige Kupplungshälfte (23) oder das stellantriebseitige Steuerelementteil (9b) in Vollastrichtung vorspannt.

10. Lastverstelleinrichtung nach einem der Ansprüche 1 bis 9, **dadurch gekennzeichnet**, daß das Istwerterfassungselement (19) dem stellantriebseitigen Steuerelementteil (9b) zugeordnet ist .

11. Lastverstelleinrichtung nach einem der Ansprüche 1 bis 10, **dadurch gekennzeichnet**, daß ein weiteres Istwerterfassungselement (20) dem stellgliedseitigen Steuerelementteil (9a) zugeordnet ist.

FIG.1

FIG.2

FIG.3

FIG.4